# FASCICULE DE BREVET EUROPEEN

(11) **EP 3 150 896 B1**
(45) Date de publication et mention de la délivrance du brevet: **05.09.2018**
(21) Numéro de dépôt: 16191031.0
(22) Date de dépôt: 28.09.2016
(51) Int. Cl.: F16L 21/06, F16L 33/04, F16B 2/08

(54) **COLLIER DE SERRAGE A ENTRETOISE**
SCHLAUCHKLEMME MIT ABSTANDHALTER
CLAMPING COLLAR WITH SPACER

(30) Priorité: 01.10.2015 FR 1559350
(43) Date de publication de la demande: 05.04.2017
(73) Titulaire: Etablissements CAILLAU, 92130 Issy-les-Moulineaux (FR)
(72) Inventeur: DRIVON, Stéphane, 41200 ROMORANTIN (FR); PREVOT, Fabrice, 41130 SELLES-SUR-CHER (FR)
(74) Mandataire: Intès, Didier Gérard André

(56) Documents cités:
- DE-A1- 2 228 060
- US-A1- 2004 216 284
- US-A1- 2012 018 999
- US-B2- 7 055 223

## Description

Le présent exposé concerne un collier de serrage comprenant une ceinture enroulée sur elle-même selon un contour sensiblement cylindrique et ayant deux extrémités présentant des oreilles, relevées par rapport audit contour et aptes à être rapprochées pour serrer le collier, le collier comprenant en outre une entretoise présentant une semelle s'étendant sensiblement selon ledit contour entre les extrémités de la ceinture et une âme comprenant au moins première une patte, relevée par rapport à ladite semelle et s'étendant entre les oreilles.

La semelle de l'entretoise sert à ponter l'espace entre les extrémités de la ceinture, pour assurer un appui quasi-continu sur l'objet serré par le collier, en particulier, par exemple lorsque cet objet est un tuyau serré sur un tube dans lequel circule un fluide, pour assurer une étanchéité du serrage.

Un collier de ce type est connu par le document US 7 055 223. Dans ce collier, les oreilles présentent des perçages à travers lesquels passe la tige d'une vis de serrage, dont la tête est retenue derrière l'une des deux oreilles, tandis qu'un écrou est retenu derrière l'autre oreille. L'âme de l'entretoise présente, en coupe radiale, c'est-à-dire perpendiculaire à l'axe du contour cylindrique, une forme en V, dont les extrémités de branche appuient, respectivement contre les faces internes des oreilles dans une région éloignée de l'axe. La semelle comprend des portions de semelle, découpées dans les branches du V. Dans la mesure où ces branches présentent par ailleurs des perçages permettant le passage de la tige de serrage, ces portions de semelle sont découpées dans des zones de l'entretoise qui s'étendent entre ces perçages et les extrémités latérales de l'entretoise. Ainsi, les portions de semelle présentent une faible largeur, mesurée parallèlement à l'axe du contour sensiblement cylindrique, cette largeur étant très nettement inférieure à la largeur totale de l'entretoise. Ces portions de semelle sont en fait de fines bandelettes découpées, dont les surfaces de contact avec l'objet devant être serré par le collier sont faibles. En théorie, la semelle de l'entretoise sert à assurer un contact continu avec l'objet devant être serré, en pontant l'espace situé entre les extrémités de la ceinture. Cependant, ainsi qu'il vient d'être indiqué, la semelle de cet art antérieur est en fait formée par plusieurs portions de semelle en forme de fines bandelettes ayant une surface de contact faible avec cet objet. Il en résulte que la continuité d'appui est aléatoire puisqu'une partie importante de la surface de l'objet située entre les extrémités de la ceinture n'est pas recouverte par les bandelettes. De plus, ces bandelettes sont en elles-mêmes peu résistantes mécaniquement et risquent de se déformer sous l'effet d'efforts de serrage importants.

On connaît par ailleurs, par exemple par le document WO 2011/011773, une entretoise formée par un plot massif disposé entre les oreilles. Cette entretoise est relativement coûteuse à fabriquer, présente une masse relativement élevée et une rigidité très importante, de sorte que sa forme ne s'adapte pas à la réduction du diamètre de la ceinture opérée lors du serrage.

Un autre collier de serrage avec une entretoise est divulgué par le document US 2012/0018999. Selon un aspect, l'invention vise à remédier à ces inconvénients de l'état de la technique en proposant un collier muni d'une entretoise peu coûteuse à fabriquer tout en permettant de réaliser un pontage efficace de l'espace situé entre les extrémités de la ceinture.

Ainsi, le présent exposé concerne un collier de serrage comprenant une ceinture enroulée sur elle-même selon un contour sensiblement cylindrique et ayant deux extrémités présentant des oreilles, relevées par rapport audit contour et aptes à être rapprochées pour serrer le collier, le collier comprenant en outre une entretoise présentant une semelle s'étendant sensiblement selon ledit contour entre les extrémités de la ceinture et une âme comprenant au moins une première patte, relevée par rapport à ladite semelle et s'étendant entre les oreilles, collier dans lequel l'entretoise est formée par une plaquette pliée et présente un premier pliage situé à la jonction entre ladite première patte et la semelle, et un deuxième pliage situé à une première extrémité de la semelle, la semelle présentant une première portion doublée entre lesdits premier et deuxième pliages.

Ainsi, l'entretoise est formée par une simple plaquette pliée qui peut donc aisément être mise à la dimension souhaitée et est peu coûteuse à fabriquer. En effet, selon le diamètre du collier et la longueur de l'espace devant être ponté entre les extrémités de la ceinture, la plaquette peut être découpée à la dimension voulue et les premier et deuxième pliages être réalisés aux endroits souhaités. De plus, la semelle présente une première portion doublée, ce qui augmente localement sa rigidité tout en permettant une légère déformation lors du serrage, due au fait qu'elle est réalisée à partir d'une plaquette et non à partir d'un élément massif. Enfin, la semelle peut ainsi présenter une surface continue d'appui sur l'objet devant être serré pour ponter efficacement l'espace entre les extrémités de la ceinture sans, contrairement à celle du document US 7 055 223, laisser une large surface de cet objet sans appui par la semelle.

Optionnellement, l'âme présente en outre une deuxième patte qui s'étend contre la première patte de sorte que l'âme est doublée.

Dans ce cas, l'épaisseur de l'âme est le double de l'épaisseur de la plaquette.

Optionnellement, l'entretoise présente un troisième pliage situé à la deuxième extrémité de la semelle, la semelle présentant une deuxième portion doublée entre ce troisième pliage et l'âme.

Dans ce cas, la semelle présente deux portions doublées, la première portion doublée s'étendant d'un côté de l'âme, jusqu'à la première extrémité de la semelle, et la deuxième portion doublée s'étendant de l'autre côté de l'âme, jusqu'à la deuxième extrémité de la semelle opposée à la première extrémité. La semelle est ainsi renforcée sur toute sa longueur, cette longueur étant mesurée selon la circonférence de la ceinture et, ce, de manière équilibrée de part et d'autre de l'âme. Ces deux doublages, de part et d'autre de l'âme, permettent d'optimiser la répartition des efforts de réaction entre la semelle de l'entretoise et l'objet serré à l'aide du collier.

Optionnellement, l'entretoise présente un quatrième pliage situé à la jonction entre la deuxième patte et la semelle, la semelle présentant une deuxième portion doublée entre ledit quatrième pliage et la deuxième extrémité de la semelle.

Comme on le verra dans la suite, le quatrième pliage peut être présent avec seulement les premier et deuxième pliages, ou bien avec les premier et deuxième et troisième pliages. Quoi qu'il en soit, l'existence de ce quatrième pliage permet également de doter la semelle d'une deuxième portion doublée, du côté opposé de l'âme par rapport à la première portion doublée.

Optionnellement, l'âme présente au moins une excroissance latérale et/ou au moins une excroissance en prolongement de ladite au moins une première patte.

En particulier, comme on le verra dans la suite, une telle excroissance joue le rôle de détrompeur de position et facilite la manipulation de l'entretoise.

Optionnellement, les oreilles présentent des perçages, et le collier présente une tige de serrage traversant ces perçages.

Optionnellement, l'âme présente un perçage également traversé par la tige de serrage.

Optionnellement, le collier comporte au moins une rondelle retenue sur la tige de serrage d'un côté de l'âme.

Une telle rondelle permet de pré-positionner l'entretoise sur la tige de serrage en favorisant donc son positionnement correct par rapport à l'objet devant être serré par le collier.

Optionnellement, chacune des deux pattes de l'âme présente un perçage, ces perçages étant désaxés.

Un faible désaxement permet également de pré-positionner l'entretoise sur la tige de serrage. En effet, si les dimensions des perçages sont juste suffisantes pour permettre le passage de la tige de la vis dans chaque perçage, ce désaxement fait naturellement frotter la tige de la vis contre les bords des perçages en maintenant ainsi l'entretoise par frottement sur la tige.

Optionnellement, la ceinture et l'entretoise sont métalliques.

En particulier, le métal utilisé est l'acier inoxydable. Il peut s'agir du même métal pour la ceinture du collier et la plaquette dans laquelle est réalisée l'entretoise.

L'invention sera bien comprise et ses avantages apparaîtront mieux, à la lecture de la description détaillée qui suit, de modes de réalisation représentés à titre d'exemples non limitatifs. La description se réfère aux dessins annexés, sur lesquels :
- la figure 1 est une vue en perspective d'un collier de serrage selon un mode de réalisation, à l'état non serré ;
- la figure 2 est une vue en bout du collier de la figure 1 ;
- la figure 3 est une vue en perspective de l'entretoise du collier des figures 1 et 2 ;
- la figure 4 est une vue en bout de l'entretoise de la figure 3 ;
- la figure 5 est une vue selon la flèche V de la figure 4 ;
- la figure 6 est une vue à plat de la plaquette dans laquelle est réalisée l'entretoise; et
- les figures 7, 8 et 9 sont des vues en bout d'une entretoise selon des variantes.

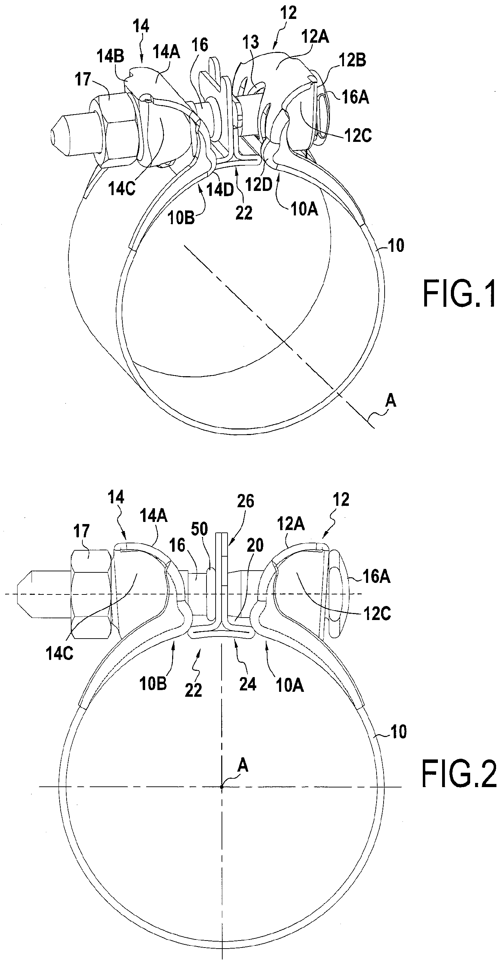

Le collier de serrage représenté sur les figures 1 et 2 comprend une ceinture 10 enroulée sur elle-même selon un contour sensiblement cylindrique d'axe A. Les extrémités 10A et 10B de cette ceinture présentent des oreilles respectivement 12 et 14, relevées par rapport au contour cylindrique et aptes à être rapprochées pour serrer le collier. De manière connue en soi, ces oreilles présentent des perçages (on voit par exemple le perçage 13 de l'oreille 12 sur la figure 1) pour permettre le passage d'une tige de serrage 16 coopérant avec des organes de serrage prenant appui sur les oreilles pour serrer le collier. En l'espèce la tige de serrage est la tige d'une vis dont la tête 16A, qui forme un premier organe de serrage, est en appui derrière l'oreille 12, et un écrou 17 vissé sur la tige 16 forme le deuxième organe de serrage en appui derrière l'oreille 14. Le serrage de l'écrou provoque le rapprochement des oreilles et, donc, le serrage du collier. Globalement, la ceinture 10 et ses oreilles 12 et 14 sont du type décrit dans les documents WO 2006/109001, WO 2006/109002 et WO 2010/004233.

Les oreilles 12 et 14 sont en vis-à-vis, de part d'autre d'un espace de serrage 20 délimité entre les extrémités 10A et 10B de la ceinture. En l'espèce, chacune des oreilles présente une partie avant, respectivement 12A et 14A, qui, pour chaque oreille, est tournée vers l'autre oreille, c'est-à-dire vers l'espace de serrage 20. Les oreilles présentent également chacune une partie d'appui, respectivement 12B et 14B avec laquelle coopère un organe de serrage, respectivement 16A et 17. Les parties d'appui sont situées à l'arrière des oreilles, à l'opposé des parties avant 12A et 14A précitées. En l'espèce, les oreilles 12 et 14 sont des oreilles à prolongement. Ceci signifie que, pour chaque oreille, la partie d'appui est formée dans un prolongement de l'oreille qui est replié vers l'arrière de l'oreille considérée à l'opposé de l'autre oreille de la paire. Bien entendu, les parties avant 12A et 14A, ainsi que les parties arrière 12B et 14B présentent des perçages permettant le passage de la tige de serrage 16. Les prolongements des oreilles dans lesquelles sont formées des parties d'appui 12B et 14B présentent également les ailes, respectivement 12C et 14C, qui coopèrent avec la face arrière des parties avant, respectivement 12A et 14A pour former des entretoises entre les parties avant et les parties de serrage.

Le collier représenté sur les figures 1 et 2 comprend une entretoise 22 qui est disposée entre les parties avant 12A et 14A des oreilles et sert à ponter l'espace 20 précité. L'entretoise 22 présente une semelle 24 qui s'étend sensiblement sur le contour cylindrique entre les extrémités 10A et 10B de la ceinture et une âme 26 qui est relevée par rapport à la semelle et s'étend donc entre les oreilles 12 et 14. Ainsi, vue en bout, c'est-à-dire selon la direction de l'axe A, ou dans une coupe perpendiculaire à cet axe, l'entretoise présente une forme en T inversé, l'âme formant la jambe du T, tandis que la semelle forme le chapeau du T. La face interne de la semelle 24 peut être légèrement concave pour adopter la forme du contour cylindrique précité. Cette concavité dépend bien entendu du diamètre de la ceinture et de la longueur de la semelle, mesurée selon la circonférence du contour interne de la ceinture.

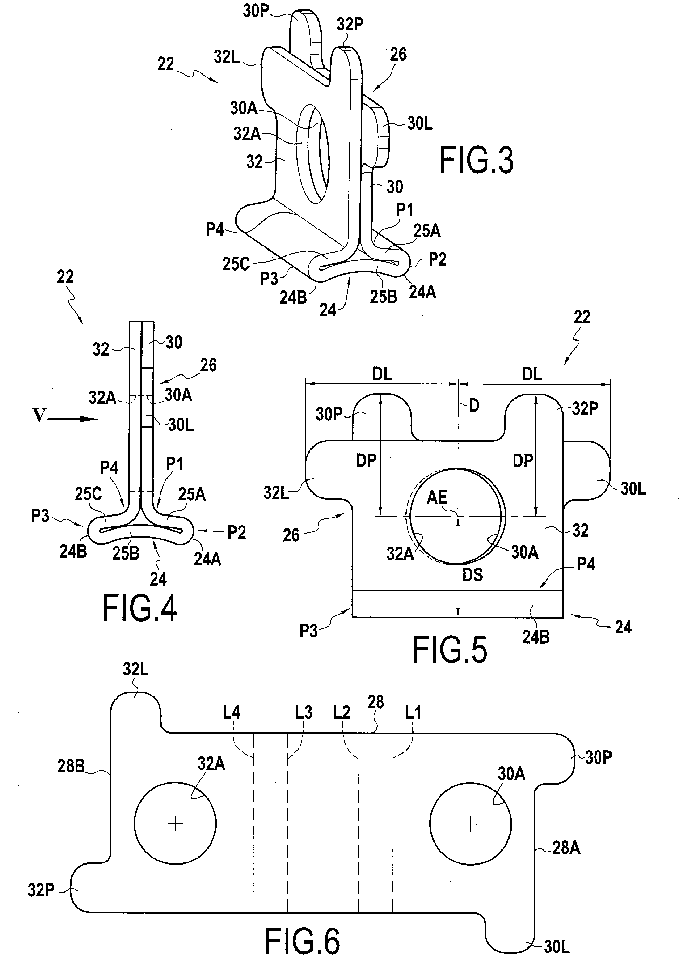

En se référant aux figures 3 à 6, on voit que l'entretoise 22 est formée par une plaquette 28 qui est pliée en différents endroits, selon de lignes de pliage perpendiculaires à se longueur.

L'âme 26 comporte une première patte 30 et une deuxième patte 32 qui sont repliées l'une contre l'autre et qui sont relevées par rapport à la semelle 24 de manière à s'étendre sensiblement radialement lorsque l'entretoise est en place dans le collier comme montré sur les figures 1 et 2. Bien entendu, cette âme est percée pour permettre le passage de la tige de serrage 16, et l'on voit en l'espèce deux perçages, respectivement 30A et 32A, formés dans les pattes 30 et 32. Les pattes sont plaquées l'une contre l'autre de sorte que leurs surfaces internes, tournées l'une vers l'autre, sont en contact.

Dans le mode de réalisation représenté, on voit que l'entretoise présente un premier pliage P1 situé à la jonction entre la première patte 30 et la semelle 24, un deuxième pliage P2 situé à la première extrémité 24A de la semelle, un troisième pliage P3 situé à la deuxième extrémité 24B de la semelle, et un quatrième pliage P4 situé à la jonction entre la deuxième patte 32 et la semelle.

La semelle présente ainsi un pan interne 25B, qui est orienté vers l'axe A et qui forme un retour à partir du pliage P2 jusqu'au pliage P3. La semelle présente ainsi une première portion doublée dans laquelle un pan externe 25A qui s'étend entre les pliages P1 et P2 double le pan interne 25B du côté externe de la semelle, situé à l'opposé de l'axe A. La semelle présente également une deuxième portion doublée formée par un deuxième pan externe 25C qui s'étend, entre les pliages P3 et P4, du côté externe par rapport au pan interne 25B. De plus, l'âme 26 est doublée du fait que les pattes 30 et 32 s'étendent l'une contre l'autre.

Sur la figure 6, la plaquette 28 dans laquelle est réalisée l'entretoise est représentée à plat, et l'on voit les perçages 30A et 32A des pattes 30 et 32, ainsi que les lignes L1, L2, L3 et L4 selon lesquelles sont respectivement réalisés les pliages P1, P2, P3 et P4.

L'âme 26 présente au moins une excroissance latérale et/ou au moins une excroissance en prolongement de la patte 30 ou 32. En l'espèce, chacune des pattes 30 et 32 présente une excroissance latérale, respectivement 30L et 32L qui fait saillie sur un côté de l'entretoise, dans la direction de l'axe A. En l'espèce, ces excroissances sont situées sur deux côtés opposés de l'entretoise. Lorsque l'entretoise est en place dans le collier, ces excroissances dépassent des côtés de l'entretoise selon la direction de l'axe A, respectivement dans un sens et dans l'autre.

De même, chacune des pattes 30 et 32 présente un prolongement, respectivement 30P et 32P qui sont chacun formés à une extrémité de la plaquette 28. Lorsque l'entretoise est en place dans le collier, ces prolongements font saillie sensiblement radialement.

Ces excroissances et ces prolongements jouent le rôle de détrompeurs de position. On voit en effet sur la figure 5 que les distances DL entre les bords libres des excroissances latérales 30L et 32L et l'axe AE du perçage (30A,32A) de l'âme 26 prévu pour le passage de la tige de serrage (ces distances étant mesurées par rapport à un diamètre D de ce perçage perpendiculaire à la surface interne de la semelle 24), sont supérieures à la distance DS entre la face interne de la semelle 24 et l'axe AE. Ainsi, si l'entretoise est incorrectement positionnée sur la tige 16, de sorte que la semelle est orientée sensiblement perpendiculairement à l'axe A, l'une des excroissances latérales 30L ou 32L dépasse vers l'intérieur par rapport au contour cylindrique formé par la ceinture 10 et empêche donc une insertion dans cette ceinture de l'objet devant être serré. L'opérateur se rend alors immédiatement compte du positionnement incorrect et redresse l'entretoise. De même, les distances DP entre les bords libres des prolongements 30P et 32P et l'axe AE (ces distances étant mesurés perpendiculairement à un diamètre D' du perçage de l'âme parallèle à la surface interne de la semelle ou parallèle à une tangente au fond de cette surface interne), sont également supérieures à la distance DS de la surface interne de la semelle par rapport à l'axe AE. Ainsi, si l'entretoise est mal positionnée, de sorte que sa semelle 24 est disposée à l'opposé de l'axe A, les prolongements 30P et 32P font saillie à l'intérieur du contour interne de la ceinture, et s'opposent également à l'insertion de l'objet devant être serré, ce qui permet à l'opérateur de réaliser l'erreur et de la rectifier.

Dans le mode de réalisation qui vient d'être décrit, les extrémités libres 28A et 28B de la plaquette sont situées aux bouts des pattes 30 et 32 opposés à la semelle 24.

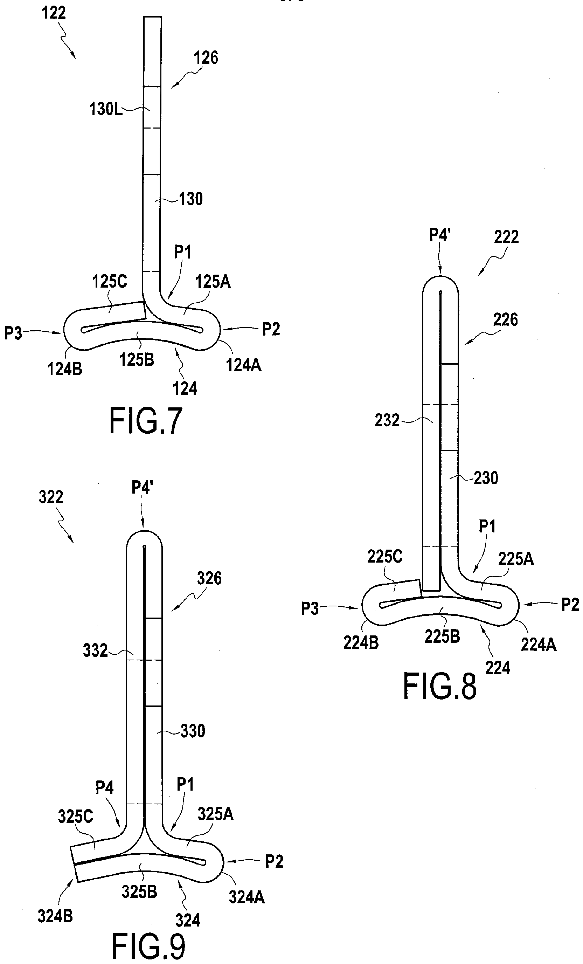

En référence aux figures 7 à 9, on décrit maintenant d'autres modes de réalisation de l'entretoise.

Sur la figure 7, l'entretoise 122 présente une patte 130 unique et une semelle 124 à deux portions doublées. En effet, cette entretoise présente un premier pliage P1 entre la patte 130 et la semelle 24, un deuxième pliage P2 situé à la première extrémité 124A de la semelle, et un troisième pliage P3 situé à la deuxième extrémité 124B de la semelle. Le pan interne 125B de la semelle est donc doublé, entre la patte 130 et le pliage P2, par un premier pan externe 125A, et il est également doublé, entre le pliage P3 et l'âme 126 par un deuxième pan externe 125C, dont l'extrémité libre est située à proximité de la patte 130. Ainsi, dans ce cas, l'âme n'est pas doublée, mais la semelle est doublée. Dans ce cas, une première extrémité libre de la plaquette est située au bout de la patte 130 opposé à la semelle, et la deuxième extrémité libre de la plaquette est située à la jonction entre le pan interne 125B et l'âme 130. En variante, la semelle pourrait se terminer à son extrémité 124B, sans présenter le pan externe 125C.

Sur la figure 8, la semelle 224 et l'âme 226 sont doublées. Plus précisément, l'âme 226 présente une première patte 230, un premier pliage P1 à la jonction entre cette première patte et la semelle 224, un deuxième pliage P2 à la première extrémité 224A de la semelle, un troisième pliage P3 à la deuxième extrémité 224B de la semelle opposée à l'extrémité 224A, et un quatrième pliage P4' au sommet de la patte 230, c'est-à-dire à la jonction de cette première patte 230 avec la deuxième patte 232 qui double l'âme en étant ramenée vers la semelle à partir de ce pliage P4'. Ainsi, le pan interne 225B de la semelle est doublé par des pans externes, respectivement le pan externe 225A entre les pliages P1 et P2 et le pan externe 225C entre le pliage P3 et l'âme. Dans ce mode de réalisation, des extrémités libres de la plaquette dans laquelle est formée l'entretoise sont situées vers la jonction entre la deuxième patte 232 et le pan interne 225B.

Sur la figure 9, l'entretoise 322 a également une semelle 324 et une âme 326 qui sont doublées. Cette entretoise présente une première patte 330 formant une partie de l'âme 326, un premier pliage P1 situé à la jonction entre la patte 330 et la semelle 324, un deuxième pliage P2 situé à la première extrémité 324A de la semelle, un pliage P4' situé au sommet de l'âme 326, à la jonction entre les pattes 330 et 332, et un autre pliage P4 situé à la jonction entre la patte 332 et la semelle 324. Cet autre pliage P4 joue le rôle du quatrième pliage évoqué précédemment. Ainsi, le pan interne 325B de la semelle est doublé par un premier pan externe 325A entre les pliages P1 et P2, et par un deuxième pan externe 325C entre le pliage P4 et la deuxième extrémité 324B de la semelle. Dans ce cas, les extrémités libres de la plaquette dans laquelle est pliée l'entretoise sont formées à cette deuxième extrémité 324B.

Bien entendu, dans les modes de réalisation des figures 7 à 9, l'âme peut présenter un perçage permettant le passage de la tige de serrage, ainsi que la ou les excroissances latérales et/ou le ou les prolongements précédemment cités. On a par exemple indiqué sur la figure 7 une excroissance latérale 130L.

En se reportant aux figures 1 et 2, on voit que le collier présente une rondelle 50 retenue sur la tige de serrage 16 d'un côté de l'âme 26 de l'entretoise. Il s'agit par exemple d'une rondelle en élastomère ou en caoutchouc, par exemple un jonc, engagée à frottement autour de la tige de serrage 16. Cette rondelle est ainsi disposée entre l'une des oreilles, en l'espèce l'oreille 14 et l'âme de l'entretoise. Elle permet de maintenir l'âme de l'entretoise à distance de cette oreille pour assurer un centrage correct de l'entretoise par rapport à l'espace 20 devant être ponté.

Les deux perçages 30A et 32A des pattes 30 et 32 peuvent être alignés lorsque ces pattes sont repliées l'une contre l'autre pour former l'âme 26. Cependant, comme on le voit sur la figure 5, on peut choisir de très légèrement désaxer les perçages 30A et 32A des pattes respectives 30 et 32 de l'âme, c'est-à-dire que ces perçages pourraient, tout en ayant les mêmes dimensions, ne pas être exactement alignés. Par exemple, l'écart entre les axes des deux perçages peut être de l'ordre de quelques dixièmes de mm. Par exemple, cet écart peut être de l'ordre de 1/100è à 1/5è du diamètre des perçages 30A et 32A, de préférence de l'ordre de 1/20è à 1/10è de ce diamètre. Dans ce cas, si les perçages ont des dimensions adaptées au diamètre de la tige de la vis, ce désaxement fait frotter les bords des perçages sur la vis et la retiennent donc naturellement dans la position souhaitée par frottement, sans pour autant empêcher le vissage, d'autant que les deux pattes 30 et 32 de l'entretoise peuvent légèrement glisser l'une contre l'autre.

La semelle de l'entretoise peut être plus ou moins large selon la distance entre les extrémités 10A et 10B des oreilles à l'état serré du collier. Par ailleurs, la face interne de la ceinture peut être légèrement relevée dans la région de ces extrémités 10A et 10B par rapport au contour cylindrique formé par la ceinture, pour loger les extrémités de la semelle. En l'espèce, on voit sur la figure 1 que la ceinture 10 est légèrement plus large que la semelle 24, la largeur étant mesurée parallèlement à l'axe A, et que les bords latéraux des extrémités 10A et 10B, situés à la base des oreilles 12 et 14 présentent des portions en avancée, respectivement 12D et 14D entre lesquelles vient se loger la semelle de l'entretoise à l'état serré du collier. Ces portions en avancée sont par exemple du type décrit dans le document WO 2006/109001.

## Revendications

1. Collier de serrage comprenant une ceinture (10) enroulée sur elle-même selon un contour sensiblement cylindrique et ayant deux extrémités présentant des oreilles (12, 14), relevées par rapport audit contour et aptes à être rapprochées pour serrer le collier, le collier comprenant en outre une entretoise (22 ; 122 ; 222 ; 322) présentant une semelle (24 ; 124 ; 224 ; 324) s'étendant sensiblement selon ledit contour entre les extrémités (10A, 10B) de la ceinture (10) et une âme (26 ; 126 ; 226 ; 326) comprenant au moins une première patte (30 ; 130 ; 230 ; 330), relevée par rapport à ladite semelle et s'étendant entre les oreilles,
**caractérisé en ce que** l'entretoise (22 ; 122 ; 222 ; 322) est formée par une plaquette (28) pliée et présente un premier pliage (P1) situé à la jonction entre ladite première patte et la semelle, et un deuxième pliage (P2) situé à une première extrémité (24A ; 124A ; 224A ; 324A) de la semelle, la semelle présentant une première portion doublée (25A ; 125A ; 225A ; 325A) entre lesdits premier et deuxième pliages (P1, P2).

2. Collier selon la revendication 1, **caractérisé en ce que** l'âme présente en outre une deuxième patte (32 ; 232 ; 332) qui s'étend contre la première patte de sorte que l'âme (26 ; 226 ; 326) est doublée.

3. Collier selon la revendication 2, **caractérisé en ce que** l'entretoise présente un troisième pliage (P3) situé à la deuxième extrémité (24B ; 124B ; 224B) de la semelle, la semelle présentant une deuxième portion doublée (25C ; 125C ; 225C ; 325C) entre ce troisième pliage (P3) et l'âme (26 ; 126 ; 226 ; 326).

4. Collier selon la revendication 2 ou 3, **caractérisé en ce que** l'entretoise présente un quatrième pliage (P4) situé à la jonction entre la deuxième patte (32 ; 232 ; 332) et la semelle (24 ; 124 ; 224 ; 324), la semelle présentant une deuxième portion doublée (25C ; 125C ; 225C ; 325C) entre ledit quatrième pliage (P4) et la deuxième extrémité (24B ; 124B ; 224B ; 324B) de la semelle.

5. Collier selon l'une quelconque des revendications 1 à 4, **caractérisé en ce que** l'âme (26 ; 126 ; 226 ; 326) présente au moins une excroissance latérale (30L, 32L) et/ou au moins une excroissance (30L, 32L) en prolongement de ladite au moins une première patte (30 ; 130 ; 230 ; 330).

6. Collier selon l'une quelconque des revendications 1 à 5, **caractérisé en ce que** les oreilles (12, 14) présentent des perçages (13) et **en ce que** le collier présente une tige de serrage (16) traversant ces perçages.

7. Collier selon la revendication 6, **caractérisé en ce que** l'âme présente un perçage (30A, 32A) également traversé par la tige de serrage (16).

8. Collier selon la revendication 7, **caractérisé en ce qu'**il comporte au moins une rondelle (50) retenue sur la tige de serrage (16) d'un côté de l'âme (26 ; 126 ; 226 ; 326).

9. Collier selon les revendications 2 et 7, **caractérisé en ce que** chacune des deux pattes (30, 32) de l'âme présente un perçage (30A, 32A), ces perçages étant désaxés.

10. Collier selon l'une quelconque des revendications 1 à 9, **caractérisé en ce que** la ceinture (10) et l'entretoise (22) sont métalliques.

## Patentansprüche

1. Rohrschelle, umfassend einen Gürtel (10), der gemäß einer im Wesentlichen zylindrischen Kontur auf sich selbst gewickelt ist und zwei Enden mit Laschen (12, 14) aufweist, die in Bezug auf die Kontur angehoben sind und geeignet sind, zusammengebracht zu werden, um die Rohrschelle festzuziehen, wobei die Rohrschelle ferner ein Distanzstück (22; 122; 222; 322) umfasst, das eine sich im Wesentlichen entlang der Kontur zwischen den Enden (10A, 10B) des Gürtels (10) erstreckende Sohle (24; 124; 224; 324) und einen Kern (26; 126; 226; 326) aufweist, der mindestens einen ersten Schenkel (30; 130; 230; 330) umfasst, der relativ zu der Sohle angehoben ist und sich zwischen den Laschen erstreckt,
**dadurch gekennzeichnet, dass** das Distanzstück (22; 122; 222; 322) durch eine gefaltete Platte (28) gebildet ist und eine erste Falte (P1), die an der Verbindung zwischen dem ersten Schenkel und der Sohle angeordnet ist, und eine zweite Falte (P2), die an einem ersten Ende (24A; 124A; 224A; 324A) der Sohle angeordnet ist, aufweist, wobei die Sohle einen ersten gedoppelten Abschnitt (25A; 125A; 225A; 325A) zwischen der ersten und zweiten Falte (P1, P2) aufweist.

2. Schelle gemäß Anspruch 1, **dadurch gekennzeichnet, dass** der Kern ferner einen zweiten Schenkel (32; 232; 332) aufweist, der sich gegen den ersten Schenkel erstreckt, so dass der Kern (26; 226; 326) gedoppelt wird.

3. Schelle gemäß Anspruch 2, **dadurch gekennzeichnet, dass** das Distanzstück eine dritte Falte (P3) aufweist, die am zweiten Ende (24B; 124B; 224B) der Sohle angeordnet ist, wobei die Sohle einen zweiten gedoppelten Abschnitt (25C; 125C; 225C; 325C) zwischen der dritten Falte (P3) und dem Kern (26; 126; 226; 326) aufweist.

4. Schelle gemäß Anspruch 2 oder 3, **dadurch gekennzeichnet, dass** das Distanzstück eine vierte Falte (P4) aufweist, die an der Verbindung zwischen dem zweiten Schenkel (32; 232; 332) und der Sohle (24; 124; 224; 324) angeordnet ist, wobei die Sohle einen zweiten gedoppelten Abschnitt (25C; 125C; 225C; 325C) zwischen der vierten Falte (P4) und dem zweiten Ende (24B; 124B; 224B; 324B) der Sohle aufweist.

5. Schelle gemäß einem der Ansprüche 1 bis 4, **dadurch gekennzeichnet, dass** der Kern (26; 126; 226; 326) mindestens einen seitlichen Vorsprung (30L, 32L) und/oder mindestens einen Vorsprung (30L, 32L) in Verlängerung des mindestens einen ersten Schenkels (30; 130; 230; 330) aufweist.

6. Schelle gemäß einem der Ansprüche 1 bis 5, **dadurch gekennzeichnet, dass** die Laschen (12, 14) Bohrungen (13) aufweisen und dass die Schelle Spannstift (16) aufweist, der diese Bohrungen durchquert.

7. Schelle gemäß Anspruch 6, **dadurch gekennzeichnet, dass** der Kern eine Bohrung (30A, 32A) aufweist, die der Spannstift (16) ebenfalls durchquert.

8. Schelle gemäß Anspruch 7, **dadurch gekennzeichnet, dass** sie mindestens eine Scheibe (50) umfasst, die an dem Spannstift (16) auf einer Seite des Kerns (26; 126; 226; 326) gehalten wird.

9. Schelle gemäß den Ansprüchen 2 und 7, **dadurch gekennzeichnet, dass** jeder der beiden Schenkel (30, 32) des Kerns eine Bohrung (30A, 32A) aufweist, wobei diese Bohrungen versetzt sind.

10. Schelle gemäß einem der Ansprüche 1 bis 9, **dadurch gekennzeichnet, dass** der Gürtel (10) und das Distanzstück (22) aus Metall sind.

## Claims

1. A clamping collar comprising a belt (10) wound on itself around a substantially cylindrical outline and having two ends provided with lugs (12, 14) that are upstanding relative to said outline and that are suitable for being brought closer together for tightening the collar, the collar further comprising a spacer (22; 122; 222; 322) having a land (24; 124; 224; 324) extending substantially along said outline between the ends (10A, 10B) of the belt (10) and a web (26; 126; 226; 326) comprising at least a first tab (30; 130; 230; 330) that is upstanding relative to said land, which web extends between the lugs;
said clamping collar being **characterized in that** the spacer (22; 122; 222; 322) is formed by a strip (28) that is folded with a first fold (P1) situated at the junction between said first tab and the land, and a second fold (P2) situated at a first end (24A; 124A; 224A; 324A) of the land, the land having a first double-walled portion (25A; 125A; 225A; 325A) between said first and second folds (P1, P2).

2. A collar according to claim 1, **characterized in that** the web further has a second tab (32; 232; 332) that extends against the first tab so that the web (26; 226; 326) is a double-walled web.

3. A collar according to claim 2, **characterized in that** the spacer has a third fold (P3) situated at the second end (24B; 124B; 224B) of the land, the land having a second double-walled portion (25C; 125C; 225C; 325C) between said third fold (P3) and the web (26; 126; 226; 326) .

4. A collar according to claim 2 or claim 3, **characterized in that** the spacer has a fourth fold (P4) situated at the junction between the second tab (32; 232; 332) and the land (24; 124; 224; 324), the land having a second double-walled portion (25C; 125C; 225C; 325C) between said fourth fold (P4) and the second end (24B; 124B; 224B; 324B) of the land.

5. A collar according to any one of claims 1 to 4, **characterized in that** the web (26; 126; 226; 326) has at least one side projection (30L, 32L) and/or at least one projection (30L, 32L) in alignment with said at least a first tab (30; 130; 230; 330).

6. A collar according to any one of claims 1 to 5, **characterized in that** the lugs (12, 14) are provided with holes (13) and **in that** the collar has a tightening shank (16) passing through said holes.

7. A collar according to claim 6, **characterized in that** the web is provided with a hole (30A, 32A) through which the tightening shank (16) also passes.

8. A collar according to claim 7, **characterized in that** it includes at least one washer (50) retained on the tightening shank (16) on one side of the web (26; 126; 226; 326).

9. A collar according to claims 2 and 7, **characterized in that** each of the two tabs (30, 32) of the web is provided with a hole (30A, 32A), these holes having axes that are mutually offset.

10. A collar according to any one of claims 1 to 9, **characterized in that** the belt (10) and the spacer (22) are made of metal.
